# EUROPÄISCHE PATENTSCHRIFT

(11) **EP 3 456 696 B1**
(45) Veröffentlichungstag und Bekanntmachung des Hinweises auf die Patenterteilung: **05.06.2024**
(21) Anmeldenummer: 17191648.9
(22) Anmeldetag: 18.09.2017
(51) Int. Cl.: C04B 24/06, C04B 40/00, C04B 28/16

(54) **VERFAHREN ZUM NACHWEIS EINER ADDITIVZUSAMMENSETZUN**
METHOD FOR DETECTING AN ADDITIVE COMPOSITION
PROCÉDÉ DE DÉTECTION D' UNE COMPOSITION D'ADDITIF

(43) Veröffentlichungstag der Anmeldung: 20.03.2019
(73) Patentinhaber: PCT Chemie GmbH, 71106 Magstadt (DE)
(72) Erfinder: Rapp, Andreas, 30519 Hannover (DE)
(74) Vertreter: Hoeger, Stellrecht & Partner Patentanwälte mbB

(56) Entgegenhaltungen:
- EP-A2- 2 425 948
- WO-A1-2006/128890
- WO-A1-2011/073354
- WO-A1-2017/027318
- FR-A5- 2 168 685
- GB-A- 2 035 992
- KR-B1- 101 609 697
- US-A1- 2011 024 115
- US-A1- 2015 344 376

## Beschreibung

Die vorliegende Erfindung betrifft ein Verfahren zum Nachweis einer Additivzusammensetzung in einem Baustoff auf Basis eines hydraulischen Bindemittels, insbesondere Zement oder Anhydrid.

Hydraulisch abbindende Baustoffe wie insbesondere Beton und Estrich enthalten neben dem hydraulischen Bindemittel zumindest Wasser und einen Zuschlagstoff (z.B. Sand oder Kies). Häufig werden diesen Baustoffen jedoch auch spezielle Additive zugesetzt, um die Verarbeitungs- und/oder Produkteigenschaften positiv zu beeinflussen. Zu diesen Additiven zählen insbesondere Verflüssiger, Fließmittel, Verzögerer, Beschleuniger und Schwundreduzierer sowie Entschäumer, Plastifizierer und Polymere.

In vielen Fällen ist es wünschenswert oder erforderlich, das Vorhandensein eines Additivs in dem abgebundenen Baustoff qualitativ oder quantitativ zu bestimmen. Dies ist insbesondere dann der Fall, wenn die festgestellten Produkteigenschaften nicht den Erwartungen oder Vorgaben entsprechen und ermittelt werden soll, ob der Einbau des Baustoffs entsprechend den Vorgaben des Herstellers, des Unternehmers oder des Bauherren erfolgt ist, vor allem im Hinblick auf die Menge des oder der Additive. Ein solcher Nachweis ist jedoch sehr aufwendig, da für jedes betreffende Additiv ein geeignetes Nachweisverfahren durchgeführt werden muss. Derartige Analysen sind grundsätzlich nicht vor Ort möglich, sondern nur in einem chemisch-technischen Labor, so dass es unter Umständen zu erheblichen Zeitverzögerungen kommt, bis Klarheit über die Zusammensetzung des Baustoffs besteht.

Die GB 2 035 992 A offenbart ein Verzögererkonzentrat für einen hydraulischen Zementschlamm, wobei das Konzentrat Flurescein als Marker enthalten kann.

Die US 2015/344376 A1 offenbart eine rückverfolgbare Zementmischung, die ein Volumen an Zementmaterial und einen Marker enthält, der innerhalb des Volumens an Zementmaterial angeordnet ist.

Die WO 2011/073354 A1 offebart ein Verfahren zur Identifizierung und Quantifizierung von Massengütern in Artikeln, wobei den Massengütern eine farbstoffhaltige Polymerdispersion zugesetzt wurde.

Der vorliegenden Erfindung liegt daher die Aufgabe zugrunde, ein Verfahren vorzuschlagen, mit dem der Nachweis einer Additivzusammensetzung in einem abgebundenen Baustoff einfach und schnell durchzuführen ist.

Diese Aufgabe wird durch das Verfahren gemäß Anspruch 1 gelöst.

Die Additivzusammensetzung wird dem Baustoff beim Mischen der Komponenten in der üblichen Weise zugegeben. Nach dem Abbinden des Baustoffs lässt sich die enthaltene Markersubstanz durch Erfassung der Fluoreszenz eindeutig nachweisen, und das Vorhandensein der Additivzusammensetzung lässt sich sowohl qualitativ als auch quantitativ ermitteln. Die Erfindung stellt hierfür ein entsprechendes Nachweisverfahren bereit, auf das weiter unten im Detail eingegangen wird.

Ein weiterer entscheidender Vorteil der Erfindung ist darin zu sehen, dass sie von der Art des verwendeten Additivs völlig unabhängig ist. Es kann dasselbe einfache Nachweisverfahren für alle Additive genutzt werden, die zuvor mit der fluoreszierenden Markersubstanz versetzt wurden.

Die Zusammensetzung kann ein oder mehrere Additive umfassen, welche die Verarbeitungs- und/oder Produkteigenschaften des Baustoffs positiv beeinflussen, insbesondere die rheologischen Eigenschaften und das Verhalten bei der Verarbeitung, die Abbindegeschwindigkeit und die Festigkeit des abgebundenen Baustoffs.

Die Zusammensetzung kann insbesondere ein oder mehrere Additive umfassen, die ausgewählt sind aus Spezialzementen wie Schnellzement und Tonerdeschmelzzement, Vinylacetat-Copolymerisaten, Vinylpropionat-Copolymerisaten, Acrylester-Copolymerisaten, Epoxidharzen, Polyurethanharzen, Betonverflüssigern, Fließmitteln wie Ligninsulfonaten, Naphtalinsulfonsäure und deren Polymerisaten, Luftporenbildnern, Beschleunigern, Verzögerern, Stabilisatoren sowie Estern der Phosphorsäure, Phthalsäure, Mellitsäure und Fettsäuren mit aliphatischen oder aromatischen Alkoholen. Diese Aufzählung ist allerdings rein beispielhaft, da die vorliegende Erfindung, wie bereits erwähnt, für Additive jeglicher Art eingesetzt werden kann.

Die Additivzusammensetzung liegt vorzugsweise in Form einer wässrigen Lösung oder Suspension oder in Pulverform vor. Dadurch wird eine einfache Handhabung und Dosierbarkeit bei der Herstellung des Baustoffs ermöglicht.

Für einen Nachweis der Additivzusammensetzung mittels Fluoreszenz sind bereits relativ geringe Mengen der Markersubstanz ausreichend. Die fluoreszierende Markersubstanz ist in einem Anteil von 1 bis 1.000 ppm in der Zusammensetzung enthalten, bevorzugt im Bereich von 10 bis 100 ppm, insbesondere wenn die Zusammensetzung als wässrige Lösung oder Suspension vorliegt. Mögliche Auswirkungen der Markersubstanz auf die Produkteigenschaften des Baustoffs können in diesem Konzentrationsbereich vernachlässigt werden.

Besonders günstig ist es, wenn die fluoreszierende Markersubstanz eine Fluoreszenz im sichtbaren Wellenlängenbereich aufweist, insbesondere im Bereich von 380 nm bis 780 nm. In diesem Fall kann die Erfassung der Fluoreszenz mit bloßem Auge erfolgen, so dass zumindest ein qualitatives Nachweisverfahren an Ort und Stelle durchgeführt werden kann.

Geeignete fluoreszierende Markersubstanzen sind bestimmte Xanthenfarbstoffe, die aus anderen Bereichen für ihre fluoreszierenden Eigenschaften bekannt sind. Bevorzugt wird Fluorescein oder ein Salz hiervon als Markersubstanz eingesetzt, insbesondere Natrium-Fluorescein, welches auch als Uranin bekannt ist.

Der Baustoff auf Basis eines hydraulischen Bindemittels ist insbesondere ein Beton oder ein Estrich. Es kann sich z.B. aber auch um eine Bodenausgleichsmasse, Nivelliermasse oder Spachtelung handeln. Der Baustoff kann jeweils auch mehrere hydraulische Bindemittel enthalten.

Im Fall von Beton ist das hydraulische Bindemittel in aller Regel Zement. Es kann sich im Rahmen der Erfindung auch um Stahlbeton handeln.

Wird die Additivzusammensetzung für einen Estrich verwendet, so kann es sich im Rahmen der Erfindung um einen Zementestrich oder einen Anhydritestrich handeln, wobei Letzterer auf Basis von wasserfreiem Calciumsulfat als Bindemittel hergestellt wird.

Das erfindungsgemäße Verfahren ist sehr einfach und schnell durchzuführen. Im Falle eines quantitativen Nachweises ist die Reproduzierbarkeit des Ergebnisses naturgemäß davon abhängig, dass die Durchführung der einzelnen Schritte nach standardisierten Vorgaben erfolgt. Dies betrifft insbesondere die Partikelgrößenverteilung des in Schritt (b) hergestellten Pulvers sowie das Mengenverhältnis zwischen Pulver und Wasser bei der Herstellung des Extraktes in Schritt (c). Es hat sich allerdings gezeigt, dass sich hier bereits mit einfachen Mitteln eine relativ gute Reproduzierbarkeit erreichen lässt (siehe die Beispiele unten).

Das Extrahieren in Schritt (c) erfolgt, indem das Pulver in dem Wasser suspendiert wird und die Suspension für 5 bis 60 min geschüttelt wird. Für einen schnellen Nachweis vor Ort können bereits mit einer fünfminütigen Durchmischung gute Ergebnisse erzielt werden.

Die derart hergestellte Suspension wird dann absetzen gelassen, bevorzugt für 2 bis 10 min, und der Überstand anschließend filtriert, um den Extrakt zu erhalten. Dadurch können Feststoffanteile weitgehend entfernt werden, die bei der nachfolgenden Erfassung der Fluoreszenz stören würden.

Bei einer alternativen Ausführungsform des Verfahrens (nicht gemäß der Erfindung) werden die Erfassung in Schritt (e) und der Vergleich im Schritt (d) mit bloßem Auge durchgeführt, um die Additivzusammensetzung qualitativ nachzuweisen. Diese Variante des Verfahrens ist besonders einfach und schnell (z.B. innerhalb von 15 min) durchzuführen, insbesondere auch an Ort und Stelle, z.B. auf einer Baustelle. Als pulverisierte Probe kann insbesondere das Bohrmehl von einer oder mehreren Probebohrungen in den Baustoff verwendet werden. Pulver und Wasser können dann jeweils volumetrisch abgemessen und in einem Röhrchen zur Extraktion geschüttelt werden. Die Bestrahlung kann mit einem Laserpointer erfolgen.

Gemäß der Erfindung erfolgen die Erfassung im Schritt (e) und der Vergleich in Schritt (d) mit einem Spektrometer, um die Additivzusammensetzung quantitativ nachzuweisen. Diese Variante eignet sich insbesondere für die Durchführung des Verfahrens in einem Labor. Allerdings kann auch ein mobiles Spektrometer vor Ort (z.B. auf einer Baustelle) eingesetzt werden. Geeignete Geräte hierfür sind z.B. das "Quantus^{™} Fluorometer" (Fa. Promega GmbH) und "Aquafluor^{®}" (Fa. Nordantec GmbH), die eine Messung der Fluoreszenz in wenigen Sekunden ermöglichen. Das mobile Spektrometer kann auch zuvor auf einen Standard geeicht werden.

Die spektrometrische Erfassung der Fluoreszenz erlaubt eine genaue Berechnung der in der Probe enthaltenen Menge an Additivzusammensetzung aus dem Vergleich mit der Referenzprobe. Zur Erhöhung der Reproduzierbarkeit kann u.a. das in Schritt (b) erhaltene Pulver gesiebt werden, um eine vorgegebene Partikelgrößenverteilung für die anschließende Extraktion zu erhalten.

Diese und weitere Vorteile der Erfindung werden anhand der nachfolgenden Ausführungsbeispiele näher erläutert.

### Beispiele

### 1. Herstellung von Baustoffen

Es wurden drei Varianten eines Standardzementestrichs hergestellt, die jeweils 62,5 kg Zement als hydraulisches Bindemittel und 400 ml einer Additivzusammensetzung enthielten, die von der Anmelderin unter der Bezeichnung "Retanol Xtreme" vertrieben wird.

Bei den drei verschiedenen Estrichen enthielt die Additivzusammensetzung kein bzw. unterschiedliche Mengen an Natrium-Fluorescein als fluoreszierende Markersubstanz:

| | |
|---|---|
| Estrich 0: | Additivzusammensetzung ohne Markersubstanz |
| Estrich 1: | Additivzusammensetzung mit 10 ppm Natriumfluorescein |
| Estrich 2: | Additivzusammensetzung mit 100 ppm Natriumfluorescein. |

Nach dem Abbinden wurden aus jedem der drei Estriche Proben entnommen gemäß zwei unterschiedlichen Verfahren, nämlich einer schnellen "Baustellenmethode" (Proben -B) und einer etwas aufwendigeren "Labormethode" (Proben -L).

### 2. Probenaufbereitung nach Baustellenmethode

- Mit einer Schlagbohrmaschine mit 8-mm-HM-Bohrer Estrichdicke durchbohren
- Mit einem Blatt Papier oder Spatel das Bohrmehl von 3 gebohrten Löchern je Estrich aufsammeln
- 2 g Bohrmehl (Pulver) mit 10 g dest. Wasser in ein 15 ml Zentrifugenröhrchen einwiegen (auf der Baustelle kann ohne Waage gearbeitet werden, die auf dem Röhrchen aufgedruckte Volumenskala dient dann als Maß für die Bohrmehl- und Wassermengen)
- 5 bis 10 min, bevorzugt 5 min mit der Hand schütteln (Extrahieren), hierbei darauf achten, dass alles Bohrmehl benetzt wird
- 5 bis 10 min, bevorzugt 5 min vertikal absetzen lassen
- Mit 5-ml-Spritze mit Nadel ca. 5 ml Flüssigkeit aus dem Überstand abziehen
- Nadel abnehmen, Spritzfilter mit 0,2 µm Porenweite aufsetzen
- 3 ml Flüssigkeit durch den Spritzfilter in eine 4-Seiten-Küvette (10 x 10 mm) drücken

### 3. Probenaufbereitung nach Labormethode

- 100 bis 2.000 g, bevorzugt 200 g Estrichmaterial (Proben) in voller Estrichdicke entnehmen
- Laborbackenbrecher auf 4 mm Schlitzbreite einstellen und die Probenmenge brechen
- Estrichbruch durch 64 µm Maschenweite sieben, ergibt ca. 100 g staubfeines Siebgut (Pulver) mit besonders hohem Zementleimanteil
- 2 g Pulver mit 10 g dest. Wasser in ein 15 ml Zentrifugenröhrchen einwiegen
- 5 bis 60 min, bevorzugt 10 min horizontal liegend mit 170 Umdr./min im Orbitalschüttler bei 40 °C schütteln (Extrahieren)
- 2 bis 10 min, bevorzugt 5 min vertikal absetzen lassen
- Mit einer 5-ml-Spritze mit Nadel ca. 5 ml Flüssigkeit aus dem Überstand abziehen
- Nadel abnehmen, Spritzfilter mit 0,2 µm Porenweite aufsetzen
- 3 ml Flüssigkeit durch den Spritzfilter in eine 4-Seiten-Küvette (10 x 10 mm) drücken

### 4. Erfassung der Fluoreszenz mit bloßem Auge (Referenzbeispiel)

Die nach der obigen "Baustellenmethode" aufbereiteten Proben 0-B, 1-B und 2-B wurden mit einem blauen Laserpointer (Wellenlänge 445 nm) durchleuchtet. Für einen direkten Vergleich wurde der Laserstrahl in der genannten Reihenfolge durch die nebeneinander aufgestellten Küvetten geleitet.

Bei Betrachtung unter Tageslicht war die Probe 2-B mit 100 ppm Markersubstanz von den Proben 0-B und 1-B mit bloßem Auge deutlich unterscheidbar. In einem abgedunkelten Raum, oder wenn die Küvetten in einen dunklen Karton gestellt wurden, war zusätzlich auch die Probe 1-B, die nur ein Zehntel der Menge an Markersubstanz der Probe 2-B enthält, von der Nullprobe 0-B mit bloßem Auge eindeutig unterscheidbar.

### 5. Erfassung der Fluoreszenz mit einem Spektrometer

Die Fluoreszenz wurde auch quantitativ ermittelt, und zwar sowohl bei den nach der "Baustellenmethode" aufbereiteten Proben 0-B, 1-B und 2-B, als auch bei den nach der "Labormethode" aufbereiteten Proben 0-L, 1-L und 2-L.

Die Messvorrichtung besteht aus einem Küvettenhalter mit Aufnahme für einen 50-mW-Laser (Wellenlänge 445 nm) und einem Spektrometer (Hersteller: Ocean Optics, Typ: Spark). Es wurden folgende Messparametern verwendet:
- Pixelauflösung: 128 Pixel / Gesamtspektrum
- Integrationszeit: 180 ms
- Anzahl der Messungen zur Mittelwertbildung: 10 Stück
- Glättung: Boxcar mit Boxcarhalbweite 3 Pixel
- Gemessene Wellenlängen: 448 nm (Laserpeak) und 520 nm (Fluoreszenzpeak)
- Referenz: Glas mit Fluoreszenzpeak bei 540 nm

Die gemessenen Fluoreszenzintensitäten bei 520 nm (nach Abzug der Dunkelwerte) für alle sechs Proben sind in der folgenden Tabelle 1 dargestellt:

**Tabelle 1**

| Probe | Fluoreszenzintensität | prozentual bezogen Probe 2 |
|---|---|---|
| 0-B | 0,0 | 0,0% |
| 1-B | 54,8 | 10,5% |
| 2-B | 522,1 | 100,0% |
| 0-L | 0,0 | 0,0% |
| 1-L | 168,0 | 10,8% |
| 2-L | 1555,0 | 100,0% |

Die absoluten Intensitätswerte zeigen zum einen, dass bei der Labormethode etwa die dreifache Menge an Fluoreszenzmarkers extrahiert wurde im Vergleich zur Baustellenmethode. Dies ist insbesondere auf die andere Art der Probenzerkleinerung und die unterschiedlichen Extraktionszeiten zurückzuführen.

Entscheidend ist jedoch, dass die Ergebnisse innerhalb der jeweiligen Probenaufbereitungsmethode konsistent und reproduzierbar sind, was sich darin zeigt, dass die Fluoreszenz der Proben 1-B und 1-L tatsächlich einem Zehntel von derjenigen der Proben 2-B bzw. 2-L entspricht (mit einer Fehlertoleranz von unter 10%).

Überraschend ist auch, dass sich die beiden Methoden in dieser Hinsicht nicht unterscheiden, d.h. selbst die sehr einfach und schnell durchzuführende Baustellenmethode ermöglicht es, einen reproduzierbaren Anteil der in dem Baustoff enthaltenen Markersubstanz zu extrahieren.

## Patentansprüche

1. Verfahren zum Nachweis einer Additivzusammensetzung in einem abgebundenen Baustoff auf Basis eines hydraulischen Bindemittels, insbesondere Zement oder Anhydrit, wobei die Additivzusammensetzung 1 bis 1.000 ppm einer fluoreszierenden Markersubstanz umfasst und dem Baustoff vor dem Abbinden zugegeben wurde, umfassend die Schritte:
(a) Entnehmen einer Probe des Baustoffs;
(b) Zerkleinern der Probe zu einem Pulver;
(c) Extrahieren des Pulvers mit Wasser, um einen Extrakt zu erhalten, indem das Pulver in dem Wasser suspendiert wird und die Suspension für 5 bis 60 min geschüttelt wird;
(c1) Absetzen lassen der Suspension und anschließendes Filtrieren des Überstandes, um den Extraktes zu erhalten;
(d) Bestrahlen des Extraktes mit Licht einer Wellenlänge im Absorptionsbereich der fluoreszierenden Markersubstanz;
(e) Erfassen der emittierten Fluoreszenz mit einem Spektrometer; und
(f) Vergleichen der erfassten Fluoreszenz mit derjenigen einer Referenzprobe, die eine bekannte Menge der fluoreszierenden Markersubstanz enthält, um die Additivzusammensetzung quantitativ nachzuweisen.

2. Verfahren nach einem der vorhergehenden Ansprüche, wobei die Additivzusammensetzung ein oder mehrere Additive umfasst, die ausgewählt sind aus Spezialzementen wie Schnellzement und Tonerdeschmelzzement, Vinylacetat-Copolymerisaten, Vinylpropionat-Copolymerisaten, Acrylester-Copolymerisaten, Epoxidharzen, Polyurethanharzen, Betonverflüssigern, Fließmitteln wie Ligninsulfonaten, Naphtalinsulfonsäure und deren Polymerisaten, Luftporenbildnern, Beschleunigern, Verzögerern, Stabilisatoren sowie Estern der Phosphorsäure, Phthalsäure, Mellitsäure und Fettsäuren mit aliphatischen oder aromatischen Alkoholen.

3. Verfahren nach einem der vorhergehenden Ansprüche, wobei die fluoreszierende Markersubstanz in einem Anteil von 10 bis 100 ppm in der Additivzusammensetzung enthalten ist.

4. Verfahren nach einem der vorhergehenden Ansprüche, wobei die fluoreszierende Markersubstanz eine Fluoreszenz im sichtbaren Wellenlängenbereich aufweist, insbesondere im Bereich von 380 nm bis 780 nm.

5. Verfahren nach Anspruch 4, wobei die fluoreszierende Markersubstanz ein Xanthenfarbstoff ist, bevorzugt Fluorescein oder ein Salz hiervon, insbesondere Natrium-Fluorescein.

6. Verfahren nach einem der vorhergehenden Ansprüche, wobei der Baustoff ein Beton oder ein Estrich ist.

7. Verfahren nach Anspruch 6, wobei der Estrich ein Zementestrich oder ein Anhydritestrich ist.

8. Verfahren nach einem der vorhergehenden Ansprüche, wobei die Suspension in Schritt c1 für 2 bis 10 min absetzen gelassen wird.

## Claims

1. Method for detecting an additive composition in a set building material based on a hydraulic binder, in particular cement or anhydrite, wherein the additive composition comprises 1 to 1000 ppm of a fluorescent marker substance and was added to the building material before setting, comprising the steps of:
(a) Taking a sample of the building material,
(b) Crushing the sample to a powder,
(c) Extracting the powder with water to obtain an extract, by suspending the powder in water and shaking the suspension for 5 to 60 minutes,
(c1) Allowing the suspension to settle and subsequently filtering the supernatant to obtain the extract,
(d) Irradiating the extract with light with a wavelength in the absorption range of the fluorescent marker substance,
(e) Detecting the emitted fluorescence with a spectrometer, and
(f) Comparing the detected fluorescence with that of a reference sample, which contains a known quantity of the fluorescent marker substance, in order to quantitatively detect the additive composition.

2. Method according to any of the preceding claims, wherein the additive composition comprises one or more additives, which are selected from special cements such as fast-hardening cement and high-alumina cement, vinyl acetate copolymers, vinyl propionate copolymers, acrylic ester copolymers, epoxy resins, polyurethane resins, concrete plasticizers, flow agents such as lignosulfonates, naphthalene sulfonic acid and their polymers, air-entraining agents, accelerators, retarders, stabilizers, as well as esters of phosphoric acid, phthalic acid, mellitic acid and fatty acids with aliphatic or aromatic alcohols.

3. Method according to any of the preceding claims, wherein the fluorescent marker substance is contained in the additive composition in a proportion of 10 to 100 ppm.

4. Method according to any of the preceding claims, wherein the fluorescent marker substance has fluorescence in the visible wavelength range, in particular in the range of 380 nm to 780 nm.

5. Method according to claim 4, wherein the fluorescent marker substance is a xanthene dye, preferably fluorescein or a salt thereof, in particular sodium fluorescein.

6. Method according to any of the preceding claims, wherein the building material is a concrete or a screed.

7. Method according to claim 6, wherein the screed is a cement screed or an anhydrite screed.

8. Method according to any of the preceding claims, wherein the suspension is allowed to settle for 2 to 10 minutes in step c1.

## Revendications

1. Procédé de détection d'une composition d'additif dans un matériau de construction à prise à base d'un liant hydraulique, en particulier de ciment ou d'anhydrite, dans lequel la composition d'additif comprend 1 à 1000 ppm d'une substance de marquage fluorescente et a été ajoutée au matériau de construction avant la prise, comprenant les étapes :
(a) de prélèvement d'un échantillon du matériau de construction ;
(b) de broyage de l'échantillon en une poudre ;
(c) d'extraction de la poudre avec de l'eau pour obtenir un extrait en ce que la poudre est mise en suspension dans l'eau et la suspension est agitée pendant 5 à 60 min ;
(c1) la décantation de la suspension puis la filtration du surnageant pour obtenir l'extrait ;
(d) l'exposition de l'extrait à un rayon de lumière d'une longueur d'onde dans la zone d'absorption de la substance de marquage fluorescente ;
(e) la détection de la fluorescence déterminée avec un spectromètre ; et
(f) la comparaison de la fluorescence détectée avec celle d'un échantillon de référence, qui précisément contient une quantité connue de la substance de marquage fluorescente pour détecter quantitativement la composition d'additif.

2. Procédé selon l'une quelconque des revendications précédentes, dans lequel la composition d'additif comprend un ou plusieurs additifs, qui sont choisis parmi des ciments spéciaux, comme du ciment rapide, du ciment alumineux, des copolymères d'acétate de vinyle, des copolymères de propionate de vinyle, des copolymères d'ester acrylique, des résines époxy, des résines de polyuréthane, des fluidifiants de béton, des agents rhéologiques comme des sulfonates de lignine, de l'acide naphtaline-sulfonique et ses polymères, des entraîneurs d'air, des accélérateurs, des retardateurs, des stabilisateurs ainsi que des esters d'acide phosphorique, de l'acide phtalique, de l'acide mellitique et des acides gras avec des alcools aliphatiques ou aromatiques.

3. Procédé selon l'une quelconque des revendications précédentes, dans lequel la substance de marquage fluorescente est contenue en une proportion de 10 à 100 ppm dans la composition d'additif.

4. Procédé selon l'une quelconque des revendications précédentes, dans lequel la substance de marquage fluorescente présente une fluorescence dans la plage de longueurs d'onde visible, en particulier dans la plage de 380 nm à 780 nm.

5. Procédé selon la revendication 4, dans lequel la substance de marquage fluorescente est un colorant xanthène, de manière préférée une fluorescéine ou un sel de celui-ci, en particulier de la fluorescéine sodium.

6. Procédé selon l'une quelconque des revendications précédentes, dans lequel le matériau de construction est un béton ou une chape.

7. Procédé selon la revendication 6, dans lequel la chape est une chape en ciment ou une chape en anhydrite.

8. Procédé selon l'une quelconque des revendications précédentes, dans lequel on laisse la suspension se décanter dans l'étape c1 pendant 2 à 10 min.
